# EUROPEAN PATENT SPECIFICATION

(11) **EP 3 513 057 B1**
(45) Date of publication and mention of the grant of the patent: **01.04.2020**
(21) Application number: 17772595.9
(22) Date of filing: 31.08.2017
(51) Int. Cl.: F03B 5/00

(54) **PRECESSION FLUID TURBINE**
KREISELBEWEGUNGSFLÜSSIGKEITSTURBINE
TURBINE À FLUIDE DE PRÉCESSION

(30) Priority: 16.09.2016 CZ 20160572
(43) Date of publication of application: 24.07.2019
(73) Proprietor: CVUT- Fakulta Stavebni, 166 29 Praha 6 (CZ); Protur - Precession Rolling Turbine S.R.O., 104 00 Praha 10 - Uhrineves (CZ)
(72) Inventor: SEDLACEK, Miroslav, 150 06 Praha 5 (CZ)
(74) Representative: Andera, Jiri
(86) International application number: PCT/CZ2017/000058
(87) International publication number: WO 2018/050132

(56) References cited:
- EP-B1- 1 015 760
- WO-A1-2015/032368
- CZ-B6- 302 361
- CZ-B6- 304 399
- CZ-U1- 18 890
- CZ-U1- 24 439

## Description

### Technical Field

The invention relates to a precession fluid turbine comprising a fluid reservoir with an inlet fluid opening and with an outlet fluid opening and in the fluid reservoir, between the inlet fluid opening and the outlet fluid opening, a stator nozzle is arranged and in the stator nozzle, a bladeless rolling rotor is arranged comprising of a body of a rotational shape with a shaft, the rolling rotor being mounted on a holding device enabling gyratory rolling of the rotor on the inner wall of the stator nozzle, the rolling rotor being interconnected with an electric current generator by means of a mechanism

### Prior Art

Fluid machines are known that have a stator with an inlet fluid opening and with an outlet fluid opening and in the stator, on a holding device, a bladeless rolling rotor is mounted that consists of a body having a rotational shape. The holding device is adapted to enable gyratory rolling of the rotor on the inner wall of the stator. After being supplied to the stator, the streaming fluid causes the rotor to touch the inner wall of the stator and to start to roll in a gyratory way on the inner wall of the stator. Thus, at least a part of the rotor shaft does a precessional motion. Therefore, such machines are sometimes called precession machines.

The Czech Patent no. 284483 and the European Patent EP1015760 B1 disclose a rolling fluid machine comprising of a fluid reservoir fitted with an inlet and at least one outlet nozzle, at least one rolling rotor comprising of a body having a rotational shape being mounted in the area of the outlet nozzle on a holding device. The rolling rotor is mounted in such a way that it can freely roll along the inner wall of the outlet nozzle.

Fluid machines in accordance with the European Patent EP1082538 B1, with the Czech Patents no. 294708 and no. 302361 and with the Czech utility models no. 7606, no. 17908 and no. 18890 are based on the same principle.

Document WO 2015/032368 A1 discloses a precession fluid turbine comprising a stator with an intake and an outlet for fluid and a bladeless rolling rotor set on holding equipment adapted to allow the rolling of the rotor along the interior side of the stator. The rolling rotor is connected by a mechanism to an electric current generator placed in a watertight case. The mechanism comprises a crankshaft placed between the rolling rotor and the electric current generator and the crankshaft is provided with a magnetic clutch.

A common disadvantage of all the known rolling, or precession machines/turbines is that they do not deal with losses caused by the precessional motion of the shaft in the fluid or with simple and reliable protection of the electric current generator from water ingress.

### Disclosure of Invention

The above mentioned problem is solved by a precession fluid turbine comprising a fluid reservoir with an inlet fluid opening and with an outlet fluid opening and in the fluid reservoir, between the inlet fluid opening and the outlet fluid opening, a stator nozzle is arranged and in the stator nozzle, a bladeless rolling rotor is arranged comprising of a body of a rotational shape with a shaft, the rolling rotor being mounted on a holding device enabling gyratory rolling of the rotor on the inner wall of the stator nozzle, the rolling rotor being interconnected with an electric current generator by means of a mechanism in accordance with the invention the principle of which is that in the fluid reservoir, over the rotor, an air chamber is arranged that is open at its bottom end, the rotor shaft reaching into the said air chamber. In the air chamber, an electric current generator is arranged that is interconnected with the rotor shaft by means of a mechanism.

An advantage of the design based on the invention is that the electric current generator can be arranged below the water level without requiring costly insulation against the ingress of water. Another advantage is a considerable increase of efficiency of the precession fluid turbine because a substantial part of the rotor shaft and the complete mechanism interconnecting the rolling rotor with the electric current generator work in the air chamber, which means that their motion is not hindered by the flowing fluid.

In the preferred embodiment, a pressurized air supply line is connected to the air chamber and at the bottom edge of the air chamber, a fluid level sensor can be arranged to control the pressurized air supply.

In another preferred embodiment, the pressurized air supply line is connected to a compressor.

In a preferred embodiment, a supply pipeline is connected to the inlet opening so that the turbine can be operated at a gradient of any height.

If the turbine is installed in a river stream, an adapter can be preferably connected to the inlet opening whose inlet opening is flared and oriented against the river stream, the outlet opening of the fluid reservoir being oriented downstream.

To positively influence the functionality of the rotor and to increase the turbine stability, the fluid quantity in the bottom part of the fluid reservoir should preferably be bigger than in its top part. This means that in a preferred embodiment, the air chamber gets narrower towards the rolling rotor.

### Brief Description of Drawings

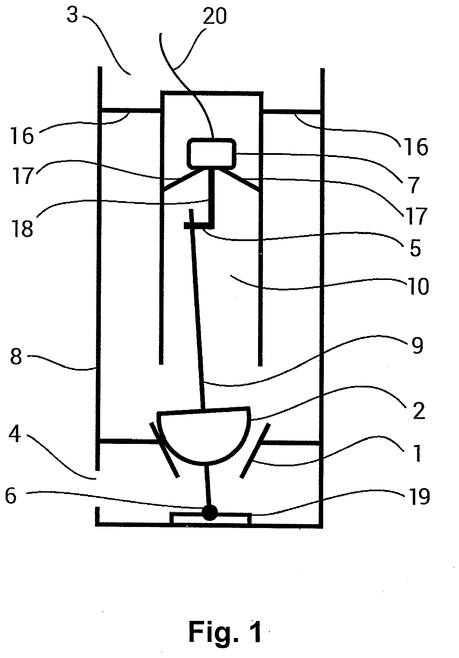

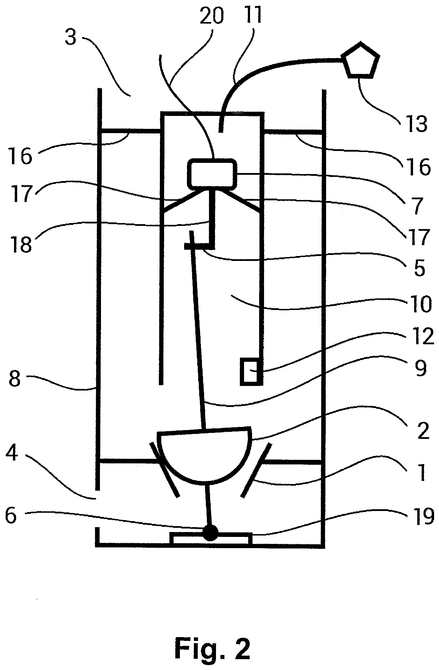

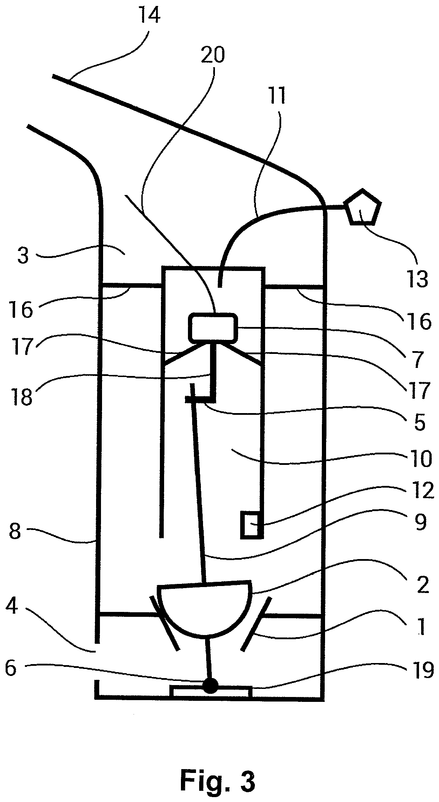

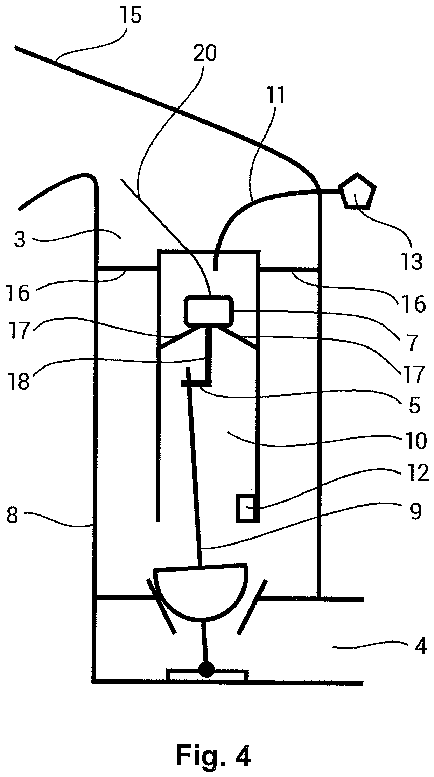

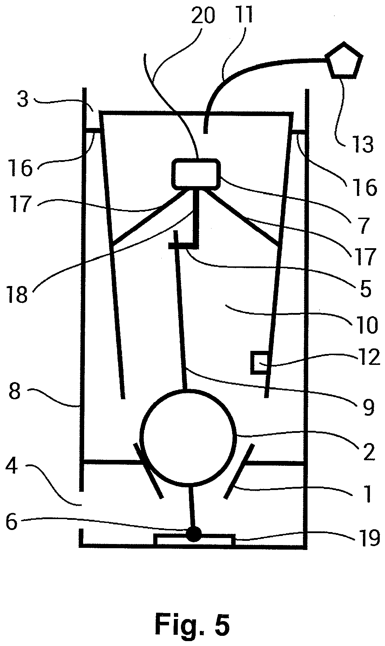

Fig. 1 schematically shows the first embodiment example of the precession fluid turbine according to the invention. Fig. 2 shows the embodiment with the pressurized air supply connected to the air chamber. Fig. 3 shows the embodiment with the supply pipeline connected to the inlet opening. Fig. 4 shows a preferred embodiment for installation in a sea or river stream. Fig. 5 shows an embodiment with a specific shape of the air chamber.

### Description of preferred embodiments

The precession fluid turbine in accordance with Fig. 1 comprising a fluid reservoir 8 with a fluid inlet opening 3 and a fluid outlet opening 4. A stator nozzle 1 is arranged in the fluid reservoir 8 between the fluid inlet opening 3 and the fluid outlet opening 4. In the stator nozzle 1 a bladeless rolling rotor 2 with a shaft 9 is arranged. The rolling rotor 2 may have any rotational shape.

The rolling rotor 2 is mounted on a holding device 6. The holding device 6 can consist of any known mechanism that enables gyratory rolling of the rotor 2 along the inner wall of the stator nozzle 1. In the embodiment of Fig. 1, the holding device 6 consists of a rod-like support that is firmly connected to the bottom of the rotor 2 and at the opposite side it is terminated with a ball-shaped joint, mounted in a bracket 19.

In the fluid reservoir 8, over the rotor 2, there is an air chamber 10 that is at least partly immersed in the fluid and is open at its bottom end, so it works on the principle of a known diving bell, or caisson. The air chamber 10 is suspended on arms 16 in the fluid reservoir 8 and an electric current generator 7 is fixed to a holder 17 in the air chamber. Electric current produced by the generator 7 is conducted by electric current conductors 20.

The shaft 9 of the rotor 2 reaches into the air chamber 10.

The mechanism 5 interconnecting the rolling rotor 2 with the electric current generator 7 may consist of any known mechanism for conversion of the precessional motion of the shaft 9 of the rolling rotor 2 to the rotational motion of the shaft 18 of the electric current generator 7, e.g. the schematically shown crank mechanism.

Fluid enters the fluid reservoir 8 through the inlet opening 3, flows through the stator nozzle 1 and leaves through the outlet opening 4. The flowing fluid causes the rotor 2 to roll along the inner wall of the stator nozzle 1 in a gyratory manner, i.e. the axis 9 of the rotor 2 does a precessional motion.

Since a substantial part of the shaft 9 of the rotor 2 and the complete mechanism 5 move in the air chamber 10, their motion is not hindered by the flowing fluid. The result of such a design is a substantial increase of efficiency of the precession fluid turbine. In addition, the electric current generator 7 is arranged outside the fluid and does not require very costly protection from water ingress although it is situated below the water level.

The embodiment of Fig. 2 differs from the embodiment of Fig. 1 in that a pressurized air supply line 11 is connected to the air chamber 10, the supply line being connected to a compressor 13, and that at the bottom edge of the air chamber 10, a fluid level sensor 12 is arranged to control the pressurized air supply 11. The supplied pressurized air in combination with the fluid level sensor 12 can eliminate fluctuations of the level in the air chamber 10 caused by a possible air loss. The other functions of this embodiment as well as all the embodiments described below are analogous to the described function of the embodiment of Fig. 1.

The embodiment of Fig. 3 only differs from the embodiment of Fig. 2 in that a supply pipeline 14 is connected to the inlet opening 3 that makes it possible for the turbine to work at a gradient of any height.

The embodiment of Fig. 4 differs from the embodiment of Fig. 2 in that an adapter 15 is connected to the inlet opening 3 whose inlet opening is flared and oriented against the fluid stream, the outlet opening 4 of the fluid reservoir 8 being oriented downstream. This embodiment is designed for installation in a water stream.

The embodiment of Fig. 5 differs from the embodiment of Fig. 2 in that the air chamber 10 gets narrower towards the rolling rotor 2. Thus, in this embodiment, the fluid quantity in the bottom part of the fluid reservoir 8 is bigger than in its top part, which has a positive impact on stability of the fluid reservoir 8 and function of the rotor 2.

### List of reference signs

- 1: stator nozzle
- 2: rotor
- 3: inlet opening
- 4: outlet opening
- 5: mechanism
- 6: holding device
- 7: electric current generator
- 8: fluid reservoir
- 9: shaft
- 10: air chamber
- 11: pressurized air supply
- 12: level sensor
- 13: compressor
- 14: supply pipeline
- 15: adapter
- 16: arm
- 17: generator holder
- 18: generator shaft
- 19: bracket
- 20: electric current conductors

## Claims

1. A precession fluid turbine comprising a fluid reservoir (8) with an inlet fluid opening (3) and with an outlet fluid opening (4) and in the fluid reservoir (8), between the inlet fluid opening (3) and the outlet fluid opening (4), a stator nozzle (1) is arranged and in the stator nozzle (1), a bladeless rolling rotor (2) is arranged comprising of a body of a rotational shape with a shaft (9), the rolling rotor (2) being mounted on a holding device (6) enabling gyratory rolling of the rotor (2) on the inner wall of the stator nozzle (1), the rolling rotor (2) being interconnected with an electric current generator (7) by means of a mechanism (5), **characterized in that** in the fluid reservoir (8), over the rotor (2), an air chamber (10) is arranged that is open at its bottom end, the rotor (2) shaft (9) reaching into the said air chamber (10), the electric current generator (7), which is interconnected with the rotor (2) shaft (9) by means of the mechanism (5), being arranged in the air chamber (10).

2. The precession fluid turbine in accordance with claim 1, **characterized in that** a pressurized air supply line (11) is connected to the air chamber (10).

3. The precession fluid turbine in accordance with claim 2, **characterized in that** at the bottom edge of the air chamber (10) a fluid level sensor (12) is arranged to control the pressurized air supply (11).

4. The precession fluid turbine in accordance with claim 2 or 3, **characterized in that** the pressurized air supply line (11) is connected to a compressor (13).

5. The precession fluid turbine in accordance with any of the preceding claims, **characterized in that** a supply pipeline (14) is connected to the inlet opening (3).

6. The precession fluid turbine in accordance with any of the preceding claims 1 - 4, **characterized in that** an adapter (15) is connected to the inlet opening (3) whose inlet opening is flared and oriented against the fluid stream, the outlet opening (4) of the fluid reservoir (8) being oriented downstream.

7. The precession fluid turbine in accordance with any of the preceding claims, **characterized in that** the air chamber (10) gets narrower towards the rolling rotor (2).

## Patentansprüche

1. Eine Präzessionsflüssigkeitsturbine, umfassend einen Flüssigkeitsbehälter (8) mit einer Flüssigkeitseinlassöffnung (3) und einer Flüssigkeitsauslassöffnung (4), und im Flüssigkeitsbehälter (8) zwischen der Flüssigkeitseinlassöffnung (3) und Flüssigkeitsauslassöffnung (4) eine Statordüse (1) angebracht ist und im Statordüse (1) ein schaufelloser rollender Rotor (2) angebracht ist, umfassend einen Körper mit einer rotierenden Form mit einer Welle (9), wobei der rollende Rotor (2) an der Haltevorrichtung (6) angebracht ist, wodurch das Rollen des Rotors (2) auf der Innenwand der Statordüse (1) ermöglicht wird, und der rollende Rotor (2) mit einem elektrischen Generator (7) mithilfe eines Mechanismus (5) verbunden ist, **dadurch gekennzeichnet, dass** im Flüssigkeitsbehälter (8) über dem Rotor (2) sich eine Luftkammer (10) befindet, die am unteren Ende offen ist, wobei die Welle (9) des Rotors (2) bis in die benannte Kammer (10) reicht, der elektrische Generator (7), der mit der Welle (9) des Rotors (2) mithilfe eine Mechanismus (5) verbunden ist, in der Luftkammer (10) angebracht ist.

2. Die Präzessionsflüssigkeitsturbine nach Anspruch 1, **dadurch gekennzeichnet, dass** eine Druckluft-Versorgungsleitung (11) in der Luftkammer (10) mündet.

3. Die Präzessionsflüssigkeitsturbine nach Anspruch 2, **dadurch gekennzeichnet, dass** an der unteren Kante der Luftkammer (10) ein Flüssigkeitsstandsensor (12) angebracht ist, um die Druckluft-Versorgung (11) zu steuern.

4. Die Präzessionsflüssigkeitsturbine nach Anspruch 2 oder 3, **dadurch gekennzeichnet, dass** die Druckluft-Versorgungsleitung (11) an den Kompressor (13) angeschlossen ist.

5. Die Präzessionsflüssigkeitsturbine nach einem der vorhergehenden Ansprüche, **dadurch gekennzeichnet, dass** eine Zuleitung (14) an die Einlassöffnung (3) angeschlossen ist.

6. Die Präzessionsflüssigkeitsturbine nach einem der Ansprüche 1 - 4, **dadurch gekennzeichnet, dass** ein Adapter (15) an die Einlassöffnung (3) angeschlossen ist, deren Einlassöffnung aufgeweitet und gegen den Flüssigkeitsstrom ausgerichtet ist, wobei die Auslassöffnung (4) des Flüssigkeitsbehälters (8) stromabwärts ausgerichtet ist.

7. Die Präzessionsflüssigkeitsturbine nach einem der vorhergehenden Ansprüche, **dadurch gekennzeichnet, dass** die Luftkammer (10) zum rollenden Rotor (2) hin enger wird.

## Revendications

1. Turbine à fluide dans un cylindre en précession comprenant un réservoir de fluide (8) avec une ouverture d'admission de fluide (3) et une ouverture d'échappement de fluide (4), le réservoir de fluide (8) comprenant, entre l'ouverture d'admission de fluide (3) et l'ouverture d'échappement de fluide (4), une buse de stator (1) agencée et dans la buse de stator (1), un rotor tournant sans lame (2) agencé, qui comporte un corps de forme rotative avec un arbre (9), le rotor tournant (2) étant monté sur un dispositif de maintien (6) permettant le roulement giratoire du rotor (2) sur la paroi intérieure de la buse du stator (1), le rotor tournant (2) étant interconnecté avec un générateur de courant électrique (7) par l'intermédiaire d'un mécanisme (5), **caractérisé en ce que** dans le réservoir de fluide (8), au-dessus du rotor (2), une chambre à air (10) est agencée et ouverte à son extrémité inférieure, l'arbre du rotor (2) (9) pénétrant dans ladite chambre à air (10) et le générateur de courant électrique (7), qui est interconnecté avec l'arbre (9) du rotor (2) par l'intermédiaire du mécanisme (5), étant agencé dans la chambre à air (10).

2. La turbine à fluide dans un cylindre en précession conformément à la revendication 1, **caractérisée en ce qu'**une conduite d'alimentation en air sous pression (11) est reliée à la chambre à air (10).

3. La turbine à fluide dans un cylindre en précession conformément à la revendication 2, **caractérisée en ce qu'**un capteur de niveau de fluide (12) est agencé sur le bord inférieur de la chambre à air (10) pour contrôler l'alimentation en air sous pression (11).

4. La turbine à fluide dans un cylindre en précession conformément aux revendications 2 ou 3, **caractérisée en ce que** la conduite d'alimentation en air sous pression (11) est reliée à un compresseur (13).

5. La turbine à fluide dans un cylindre en précession conformément à une quelconque des revendications précédentes, **caractérisée en ce qu'**une canalisation d'alimentation (14) est raccordée à l'ouverture d'admission (3).

6. La turbine à fluide dans un cylindre en précession conformément à une quelconque des revendications précédentes 1 à 4, **caractérisée en ce qu'**un adaptateur (15) est raccordé à l'ouverture d'admission (3), l'ouverture d'admission étant évasée et orientée contre le sens d'écoulement du fluide, l'ouverture d'échappement (4) du réservoir de fluide (8) étant orientée vers l'aval.

7. La turbine à fluide dans un cylindre en précession conformément à une quelconque des revendications précédentes, **caractérisée en ce que** la chambre à air (10) se rétrécit en direction du rotor tournant (2).
